# EUROPEAN PATENT SPECIFICATION

(11) **EP 1 969 056 B1**
(45) Date of publication and mention of the grant of the patent: **21.09.2011**
(21) Application number: 06768709.5
(22) Date of filing: 30.05.2006
(51) Int. Cl.: C08L 69/00, C08K 3/10, C08K 3/22, C08L 27/18, C08L 51/04, C08L 83/04

(54) **POLYCARBONATE RESIN COMPOSITION WITH GOOD LIGHT REFLECTANCE AND GOOD FLAME RETARDANCY**
POLYCARBOANTHARZZUSAMMENSETZUNG MIT GUTEM LICHTREFLEXIONSGRAD UND GUTER FLAMMWIDRIGKEIT
COMPOSITION DE RÉSINE DE POLYCARBONATE PRÉSENTANT DE BONNES PROPRIÉTÉS DE RÉFLECTANCE DE LA LUMIÈRE ET D'ININFLAMMABILITÉ

(30) Priority: 30.12.2005 KR 20050136093; 29.05.2006 KR 20060048150
(43) Date of publication of application: 17.09.2008
(73) Proprietor: CHEIL INDUSTRIES INC., Kumi-Si, Gyeongsangbuk-do 730-030 (KR)
(72) Inventor: JUNG, Hyuk Jin, Gyeonggi-do 437-711 (KR); LIM, Jong Cheol, Gyeonggi-do 437-711 (KR); KANG, Tae Gon, Gyeonggi-do 437-711 (KR)
(74) Representative: Wolff, Felix
(86) International application number: PCT/KR2006/002091
(87) International publication number: WO 2007/078035

(56) References cited:
- WO-A1-00/27927
- JP-A- 2002 012 757
- JP-A- 2002 275 366
- JP-A- 2003 155 405
- JP-A- 2004 067 881
- JP-A- 2004 203 998

## Description

### Technical Field

The present invention relates to a polycarbonate resin composition with improved light reflectance and flame retardancy. More specifically, the present invention relates to a polycarbonate resin composition for displaying improved light resistance and flame retardancy while maintaining high light reflectance, impact resistance or heat resistance after UV irradiation. The polycarbonate resin composition comprises a polycarbonate resin, titanium dioxide, an impact modifier, a phenyl-substituted siloxane copolymer and a fluorinated polyolefin resin.

### Background Art

Generally, polycarbonate resins are plastics exhibiting high mechanical strength, improved heat resistance and transparency. Such resins are used in a wide range of engineering applications, including office automation (OA) equipment, electronics and construction materials. In many cases, these compositions are blended to overcome some of the disadvantages of polycarbonate resins. Such disadvantages include poor processability and low notch impact strength.

Resins used in electronic equipment, such as backlight components for liquid crystal displays (LCDs), require high light reflectance, good light resistance and superior color fixation. As electronic products, such as television sets, monitors and notebook computers, have become increasingly slim and thin, resins used in these electronic products are also required to have high fluidity. Polycarbonate resins used as backlight components, such as backlight frames for LCDs, are colored white to maximize light reflectance and minimize loss of light emission. Because titanium dioxide (TiO2) has the highest refractive index as measured in air, it is the main form of white pigment used in these resins.

To impart good flame retardance to such resin compositions, halogen-based flame retardants, such as antimony compounds and phosphorus-based compounds, have been used. However, since these retardants generate toxic gases during combustion, demand for resins lacking halogen-based compounds has been increasing rapidly. Phosphate-based compounds are the most common phosphorous-based flame retardants used. However, resin compositions containing phosphate-based flame retardants are prone to the so-called "juicing phenomenon". This phenomenon refers to surface cracks that form when flame retardants migrate to the surface of an article during molding. These surface cracks result in greatly diminished heat resistance.

Metal sulfonate salt-based flame retardants are commonly used to avoid halogen-based flame retardants while imparting high heat resistance and fire retardancy. However, when metal sulfonate salts are combined with large amounts of titanium dioxide (used to color resins white) flame retardancy of the resin composition deteriorates. Another drawback lies in the fact that resins incorporating metal sulfonate salt-based flame retardants tend to degrade at high temperatures leading to poor mechanical properties.

Japanese Patent Publication No. 1997-012853 discloses a flame-retardant resin composition comprising a polycarbonate resin, titanium dioxide, a polyorganosiloxane-polyalkylacrylate composite rubber, halogen-based and phosphate flame retardants, and a fluorinated polyolefin resin. U.S. Patent No. 5,837,757 discloses a flame-retardant resin composition comprising a polycarbonate resin, titanium dioxide, a stilbene-bisbenzoxazole derivative, a phosphate flame retardant, polyorganosiloxane, and a fluorinated polyolefin resin. The above-mentioned resin compositions have disadvantages in that the halogen-based and phosphate-based flame retardants accelerate the degradation of the compositions when in contact with power sources for a long period of time, causing serious yellowing of the compositions and a decrease in light reflectance properties.

In an attempt to solve these problems, U.S. Patent No. 6,664,313 suggests a flame-retardant resin composition comprising a polycarbonate resin, titanium dioxide, silica, polyorganosiloxane, and a fluorinated polyolefin resin. However, the use of silica as a flame retardant in this composition results in diminished impact resistance and leads to the formation of silver streaks on the external surface of injection-molded articles.

Thus, there exists a need to develop a polycarbonate resin composition exhibiting improved light reflectance and less yellowing even after UV radiation while avoiding deterioration of flame retardancy, mechanical strength and impact resistance.

### Disclosure of Invention

### Technical Problem

The present invention has been made in view of the above problems identified in the prior art. It is one object of the present invention to provide a polycarbonate resin composition with improved impact resistance, light reflectance, light resistance and flame retardancy. It is another object of the invention to provide a polycarbonate resin with a good balance of physical properties such as workability and appearance. These objects can be achieved by adding an impact modifier, an ultraviolet (UV) absorber, two or more different flame retardants, and a material for preserving light resistance and fluidity, etc. to a polycarbonate resin.

It is another object of the present invention to provide a molded article, which is produced from the composition, that has improved light reflectance and light resistance and satisfies the requirements of thin film technology.

The above and other objects of the present invention can be achieved by the following detailed description of the present invention.

### Technical Solution

In accordance with one aspect of the present invention, a polycarbonate resin composition is provided comprising (A) 100 parts by weight of a thermoplastic polycarbonate resin, (B) 5 to 30 parts by weight of titanium dioxide, (C) 1 to 10 parts by weight of an impact modifier, (D) 0.1 to 10 parts by weight of a phenyl-substituted siloxane copolymer, and (E) 0.05 to 5 parts by weight of a fluorinated polyolefin resin.

In accordance with another aspect of the present invention, a molded article produced from the polycarbonate resin composition is provided.

The present invention will now be described in greater detail.

The present invention provides a polycarbonate resin composition comprising (A) a thermoplastic polycarbonate resin, (B) titanium dioxide, (C) an impact modifier, (D) a phenyl-substituted siloxane copolymer, and (E) a fluorinated polyolefin resin. A detailed explanation of the respective components of the polycarbonate resin composition according to the present invention will be provided below.

(A) Polycarbonate resin

The polycarbonate resin used in the composition of the present invention can be prepared by reacting phosgene, a haloformate or a carbonic diester with a diphenol represented by Formula 1 below:

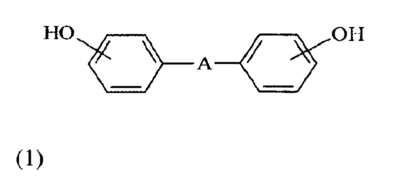

wherein A is a single bond, C1-C5 alkylene, C2-C5 alkylidene, C5-C6 cycloalkylidene, -S-, or -SO₂-.

Examples of suitable diphenols include hydroquinone, resorcinol, 4,4'-dihydroxydiphenol, 2,2-bis-(4-hydroxyphenyl)-propane, 2,4-bis-(4-hydroxyphenyl)-2-methylbutane, 1,1-bis-(4-hydroxyphenyl)-cyclohexane, 2,2-bis-(3-chloro-4-hydroxyphenyl)-propane, and 2,2-bis-(3,5-di chloro-4-hydroxyphenyl)-propane. Of these, 2,2-bis-(4-hydroxyphenyl)-propane, 2,2-bis-(3,5-dichloro-4-hydroxyphenyl)-propane and 1,1-bis-(4-hydroxyphenyl)-cyclohexane are preferred, and 2,2-bis-(4-hydroxyphenyl)-propane called 'bisphenol A' is more preferred. The weight average molecular weight of the polycarbonate resin is preferably from 10,000 to 200,000, and is more preferably from 15,000 to 80,000.

Suitable polycarbonate resins may be branched and may preferably be prepared by adding 0.05 to 2 mol%, based on the total weight of diphenols used, of tri- or higher functional compounds. Such tri- or higher functional compounds include those having three or more phenolic groups.

Possible examples of the polycarbonate resin include a homopolymer of polycarbonate, a copolymer of carbonate, or a blend thereof.

The polycarbonate resin may be wholly or partially replaced with an ester precursor. For example, an aromatic polyester-carbonate resin prepared by polymerization of a difunctional carboxylic acid.

The contents of the other components (B) to (E) in the composition of the present invention are based on 100 parts by weight of the thermoplastic polycarbonate resin (A).

(B) Titanium dioxide

The method of preparing the titanium used in the composition of the present invention is not particularly limited. In addition, the diameter of the titanium dioxide used in the composition of the present invention is not particularly limited. Preferably, however, the titanium dioxide is surface-treated with an inorganic or organic surface-treating agent.

The inorganic surface-treating agent can be aluminum oxide (alumina, Al₂O₃), silicon dioxide (silica, SiO₂), zirconium dioxide (zirconia, ZrO₂), sodium silicate, sodium aluminate, sodium aluminum silicate, zinc oxide or mica. Aluminum oxide is most preferred. The inorganic surface-treating agent is preferably used in an amount equal to 2 parts by weight or less, based on 100 parts by weight of the titanium dioxide.

The organic surface-treating agent can be polydimethylsiloxane, trimethylpropane (TMP), and pentaerythritol. The organic surface-treating agent is preferably used in an amount equal to 0.3 parts by weight or less, based on 100 parts by weight of the titanium dioxide.

The surface-treated (surface-coated) titanium dioxide may be further modified with an inorganic or organic surface-treating agent. The inorganic or organic surface-treating agent used herein may be the same as that used above.

The titanium dioxide is preferably used in an amount from 5 to 30 parts by weight, based on 100 parts by weight of the polycarbonate resin. When the content of the titanium dioxide is less than 5 parts by weight, the light reflectance of the resin composition may be diminished. Conversely, when the content of the titanium dioxide is more than 30 parts by weight, the impact resistance of the resin composition may be reduced.

(C) Impact modifier

The impact modifier (C) used in the resin composition of the present invention is a rubber-reinforced graft copolymer prepared by graft polymerizing a monomer mixture (c1) present in an amount from 5 to 95 parts by weight with a rubber-like polymer (c2) present in an amount from 5 to 95 parts by weight.

The monomer mixture (c1) consists of (c1.1) 50 to 95 parts by weight of a C1-C8 methacrylic acid alkyl ester, a C1-C8 acrylic acid alkyl ester or a mixture thereof, and (c1.2) 5 to 50 parts by weight of acrylonitrile, methacrylonitiile, a C1-C8 methacrylic acid alkyl ester, a C1-C8 acrylic acid alkyl ester, or a mixture thereof.

The C1-C8 methacrylic or C1-C8 acrylic acid alkyl ester of the monomer mixture (c1) is an ester of methacrylic or acrylic acid, which is obtained from a monohydric alcohol having one to eight carbon atoms. Specific examples thereof include methacrylic acid methyl ester, methacrylic acid ethyl ester, methacrylic acid propyl ester, and acrylic acid ethyl ester. Of these, methacrylic acid methyl ester is particularly preferred.

The rubber-like polymer (c2) include acryl rubber polyorganosiloxane/polyalkyl(meth)acrylate rubber composite or a mixture thereof. The rubber-like polymer (c2) preferably has a particle diameter of 0.05 to 4 µm to improve impact strength and surface characteristics of molded articles produced according to the present invention.

The rubber-reinforced graft copolymer can be prepared by polymerization processes known in the art. These processes include bulk polymerization, emulsion polymerization, suspension polymerization and solution polymerization. Emulsion or bulk polymerization, wherein the monomer mixture is added to the rubber-like polymer and a polymerization initiator, is preferred.

Examples of preferred rubber-reinforced graft copolymer (B) include copolymers prepared by graft copolymerizing a mixture of methacrylic acid methyl ester monomers (c1.1, c1.2) as the monomer mixture (c1), optionally, an acrylic acid methyl ester monomer (c1.1, c1.2) or an acrylic acid ethyl ester monomer (c1.1, c1.2), or a mixture thereof, with a polyorganosiloxane/polyalkyl(meth)acrylate rubber composite (c2).

The impact modifier (C) is used in an amount from 1 to 10 parts by weight, based on 100 parts by weight of the polycarbonate resin (A). When the impact modifier (C) is used in an amount of less than 1 part by weight, the impact resistance of the resin composition may be diminished. Conversely, when the impact modifier (C) is used in an amount exceeding 10 parts by weight, the heat resistance and light reflectance of the resin composition may be negatively affected.

(D) Phenyl-substituted siloxane copolymer

The phenyl-substituted siloxane copolymer (D) used in the composition of the present invention may be represented by Formula 2 below:

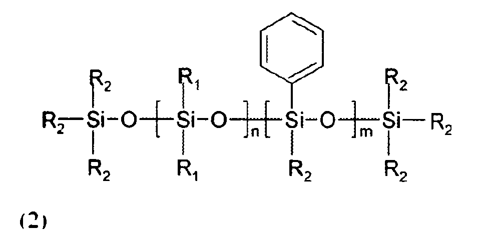

wherein each R is a methyl or phenyl group, each R₂ is a methyl, phenyl, hydroxyl, methoxy, phenoxy or vinyl group, the ratio n : m is from 9:1 to 3:7, and the sum of n and m is an integer from 1 to 500.

The viscosity of the phenyl-substituted siloxane copolymer at 25°C is preferably from) 1 to 1,000 centistokes (cSt) and is more preferably from 4 to 500 centistokes (cSt).

Preferably, the number of the phenyl-substituted siloxane repeating unit preferably makes up 10% of the overall repeating units of the phenyl-substituted siloxane copolymer. More preferably, the number of the phenyl-substituted siloxane repeating unit makes up at least 30% of the overall repeating units of the phenyl-substituted siloxane copolymer.

Examples of such phenyl-substituted siloxane copolymers include poly(methylphenyl)siloxane, poly(diphenyl)siloxane, dimethylsiloxane-diphenylsiloxane copolymers, dimethylsiloxane-methylphenylsiloxane copolymers, and combinations thereof.

The content of the phenyl-substituted siloxane copolymer in the resin composition is preferably limited to an amount from 0.1 to 10 parts by weight, based on 100 parts by weight of the polycarbonate resin (A). The use of the phenyl-substituted siloxane copolymer in an amount of less than 0.1 parts by weight results in a deterioration in the flame retardancy of the resin composition. Conversely, the use of the phenyl-substituted siloxane copolymer in an amount exceeding 10 parts by weight results in poor coloration of the resin.

(E) Fluorinated polyolefin resin

When the fluorinated polyolefin resin is mixed and extruded with the other resin components a fibrillar network is formed within the resin structure. This structure lowers the flow viscosity of the resin upon combustion and increases the shrinkage. Accordingly, dripping of the resin can be prevented.

The fluorinated polyolefin resin can be prepared by known polymerization processes. For example, the fluorinated polyolefin resin can be prepared in an aqueous medium under a pressure of 7-71 kg/cm² at a temperature of 0-200°C, preferably 20-100°C, in the presence of a free radical-forming catalyst such as sodium, potassium or ammonium peroxydisulfate.

Examples of such fluorinated polyolefin resins include polytetrafluoroethylene, polyvinylidenefluoride, tetrafluoroethylene/vinylidenefluoride copolymers, tetrafluoroethylene/hexafluoropropylene copolymers, and ethylene/tetrafluoroethylene copolymers. These resins may be used individually or in combinations. Of these, polytetrafluoroethylene is most preferred.

The fluorinated polyolefin resin has an average particle size of, preferably, 0.05 to 1,000 µm and a density of 1.2 to 2.3 g/cm². The fluorinated polyolefin resin is preferably present in an amount from 0.05 to 5 parts by weightbased on 100 parts by weight of the polycarbonate resin (A).

The fluorinated polyolefin resin may be used in an emulsive or powder state. When the fluorinated polyolefin resin is used in an emulsive state, it is uniformly dispersed in the resin composition. However, the preparation of the fluorinated polyolefin resin in an emulsion is complicated. Accordingly, the use of the polyolefin resin in a powdered form is preferred provided the fluorinated polyolefin resin can be uniformly dispersed in the resin composition to form a fibrillar network.

The polycarbonate resin composition with improved light reflectance according to the present invention may further comprise at least one general additives such as UV stabilizers, fluorescent brighteners, antioxidants, heat stabilizers, lubricants, release agents, nucleating agents, antistatic agents, stabilizers, reinforcing agents, inorganic additives, pigments, and dyes according to the desired application. The additive(s) may be present in an amount from 0 to 60 parts by weight, and, preferably, from 1 to 40 parts by weight.

Possible examples of UV stabilizers include benzotriazole, benzophenone or triazine compounds represented by Formulae 3, 4 and 5, respectively:

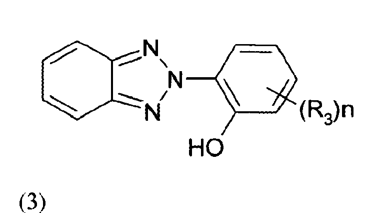

wherein R₃ is a C1-C10 alkyl or C5-C15 alkyl-substituted phenyl group, and n is an integer from 1 or 2;

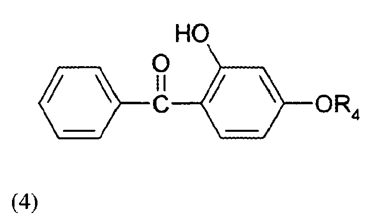

wherein R₄ is a hydrogen atom, a methyl group or a C5-C15 alkyl-substituted phenyl group; and

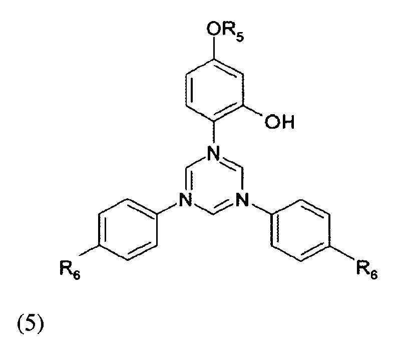

wherein R₅ is a hydrogen atom, a C1-C18 alkyl group, a C2-C6 haloalkyl group, a C1-C12 alkoxy group or a benzyl group, and each R₆ is a hydrogen atom or a methyl group.

Possible examples of fluorescent brighteners include stilbene-bisbenzoxazole derivatives. These derivatives generally act to improve the light reflectivity of the polycarbonate resin composition.

Specific examples of such stilbene-bisbenzoxazole derivatives include 4-(benzoxazol-2-yl)-4'-(5-methylbenzoxazol-2-yl)stilbene and 4,4'-bis(benzoxazol-2-yl)stilbene.

Another aspect of the present invention relates to molded articles produced from the polycarbonate resin composition. Molded articles of the present invention are suitable for use in a variety of electronic products, including backlight components for liquid crystal displays, television sets, monitors and notebook computers.

The present invention is better understood by reference to the following examples which are intended for illustrative purposes only and are not meant to limit the scope of the present invention as defined by the claims.

### Advantageous Effects

As apparent from the above description, the polycarbonate resin composition of the present invention is prepared by adding titanium dioxide, a rubber-reinforced graft copolymer, a phenyl-substituted siloxane copolymer and a fluorinated polyolefin resin to a polycarbonate resin in accordance with the kinds and content ranges of the components defined above. The resin composition of the present invention has improved light resistance, impact resistance and flame retardancy while maintaining high light reflectance as well as good balance of physical properties, such as workability and appearance. Accordingly, the resin composition of the present invention is useful in the production of injection-molded materials for use in electrical and electronic components, such as backlight components for LCDs. In addition, the polycarbonate resin composition is used to produce molded articles.

### Mode for the Invention

The preparation of polycarbonate resin, titanium dioxide, impact modifiers, flame retardants and fluorinated polyolefin resin used in the examples are as follows:

(A) Polycarbonate resin: A bisphenol-A type polycarbonate resin (PANLITE L-1250W, Teijin, Japan) having a weight average molecular weight of 25,000 g/mol.

(B) Titanium dioxide:A product marketed under the trademark TI-PURE R-106 by DuPont, U.S.A.

(C) Impact modifiers:

(C-1): A copolymer prepared by graft polymerizing a rubber mixture of polybutylacrylate and polydimethylsiloxane with a methacrylic acid methyl ester monomer marketed under the trademark Metablen S2001 by MRC, Japan.

(C-2): A copolymer prepared by graft polymerizing a methacrylic acid methyl ester monomer with a polybutylacrylate rubber marketed under the trademark EM-100 by LG Chemicals, Korea.

(C-3): A copolymer prepared by graft polymerizing a polybutadiene rubber with a methacrylic acid methyl ester monomer marketed under the trademark Paraloid EXL-2602 by Rohm & Haas, U.S.A.

(D) Flame retardants:

(D-1): A polymethylphenylsiloxane oil marketed under the mark TSF-433 by GE-Toshiba Silicones.

(D-2): A bisphenol-A derived oligomeric phosphoric acid ester marketed under the mark CR-741 by Daihachi, Japan.

(D-3): A resorcinol derived oligomeric phosphoric acid ester marketed under the mark PX-200 by Daihachi, Japan.

(D-4): A metal sulfonate salt flame retardant marketed under the mark FR-2025 by 3M, U.S.A.

(E) Fluorinated polyolefin resin: A polyolefin resin marketed under the trademark Teflon 7AJ by DuPont, U.S.A.

Examples 1 to 3

After the components were added in accordance with the quantities specified in Table 1, a primary antioxidant (marketed under the mark Irganox 1076 by Ciba) in the amount of 0.3 parts by weight and a secondary antioxidant (marketed under the mark Doverphos S9228PC by Dover Chemical) in the amount of 0.3 parts by weight were added thereto. Each of the mixtures was mixed in a general mixer, extruded through a twin-screw extruder at 180-250°C with L/D = 35 and Φ = 45 mm, and pelletized. The pellets were molded into test specimens using a 10 oz injection molding machine at a mold temperature of 280-300°C. The test specimens were subjected to physical property measurements and an evaluation of flame retardancy . The test specimens were allowed to stand at 23°C, RH 50% for 48 hours. The physical properties of the test specimens were measured in accordance with ASTM specifications.

Comparative Examples 1 to 3

Test specimens were produced in the same manner as outlined in Example 1 with the exception that (D-2), (D-3) and (D-4) were used as flame retardants instead of (D-1) in Comparative Examples 1-3, respectively. The physical properties of the test specimens were evaluated and the results are listed in Table 1.

Comparative Example 4

Test specimens were produced in the same manner as outlined in Example 1 with the exception that (C-3) was used as an impact modifier instead of (C-1). The physical properties of the test specimens were evaluated and the results are listed in Table 1.

Comparative Examples 5 and 6

Test specimens were produced in the same manner as in Example 1 with the exception that titanium dioxide in the amount of 3 parts by weight and 35 parts by weight were used in comparative Examples 5 and 6, respectively. The physical properties of the test specimens were evaluated, and the results are listed in Table 1.

Table I shows the compositions and physical properties of the resins prepared according to Examples 1-3 and Comparative Examples 1-6.

**TABLE 1**

| | | Example No. | | | Comparative Example No. | | | | | |
|---|---|---|---|---|---|---|---|---|---|---|
| | | 1 | 2 | 3 | 1 | 2 | 3 | 4 | 5 | 6 |
| (A) Polycarbonate resin | | 100 | 100 | 100 | 100 | 100 | 100 | 100 | 100 | 100 |
| (B) Titanium dioxide | | 10 | 20 | 25 | 20 | 20 | 20 | 20 | 3 | 35 |
| (C) Impact modifiers | (C-1) | 3 | 3 | - | 3 | 3 | 3 | - | 3 | 3 |
| | (C-2) | - | - | 3 | - | - | - | - | - | - |
| | (C-3) | - | - | - | - | - | - | 3 | - | - |
| (D) Flame Retardants | (D-1) | 1 | 1 | 1 | - | - | - | 1 | 1 | 1 |
| | (D-2) | - | - | - | 7 | - | - | - | - | - |
| | (D-3) | - | - | - | - | 5 | - | - | - | - |
| | (D-4) | - | - | - | - | - | 0.1 | - | - | - |
| (E) Fluorinated polyolefin resin | | 0.5 | 0.5 | 0.5 | 0.5 | 0.5 | 0.5 | 0.5 | 0.5 | 0.5 |
| Average light Reflectivity (300~700nm) | Before UV irradiation | 94 | 94 | 95 | 93 | 93 | 94 | 92 | 57 | 95 |
| | After UV irradiation for 24 hours | 91 | 92 | 92 | 83 | 85 | 87 | 84 | 45 | 92 |
| Yellow index | Before UV irradiation | 2.5 | 2.3 | 2.0 | 3.4 | 3.3 | 2.8 | 3.1 | 5.9 | 2.0 |
| | After UV irradiation for 24 hours | 7.4 | 5.9 | 5.4 | 14.3 | 13.7 | 11.4 | 12.9 | 18.7 | 5.1 |
| UL 94 flame retardancy (1.6mm) | | V-0 | V-0 | V-0 | V-1 | V-1 | V-2 (drip) | V-0 | V-0 | V-0 |
| Total flame-out time (sec.) | | 21 | 25 | 26 | 73 | 64 | - | 27 | 23 | 32 |
| IZOD impact strength (1/8") | | 71 | 69 | 68 | 47 | 52 | 65 | 61 | 72 | 35 |
| Melt flow index | | 31 | 32 | 33 | 58 | 53 | 32 | 30 | 28 | 39 |
| Vicat softening point (°C) | | 140 | 141 | 140 | 124 | 126 | 139 | 139 | 141 | 140 |

Evaluation of physical properties

(1) The average light reflectivity and yellow index were measured before and after UV irradiation using a colorimeter marketed under the mark Minolta 3600D by CIE Lab. The specimens were irradiated using a UV-condensation machine in accordance with ASTM G53.

(2) The flame retardancy and total flame-out time were evaluated using 1.6 mm thick specimens in accordance with UL-94.

(3) The total flame-out time was evaluated as the sum of the first flame-out time, the second flame-out time and the glowing time.

(4) The notch Izod impact strength was measured using 1/8" specimens in accordance with ASTM D256.

(5) The melt flow index was evaluated in accordance with ASTM D1238.

(6) The Vicat softening point was evaluated in accordance with ASTM D 1525.

As can be seen from the results of Table 1, the resins prepared in Comparative Examples 1 and 2 showed a large decrease in light reflectance, a very serious change in color after 24 hours of UV irradiation, a lowering in flame retardancy and a considerable decrease in impact strength when compared to those prepared in Examples 1 to 3. Although the resin prepared in Comparative Example 3 showed good impact strength, it also showed a very serious change in color and a decrease in flame retar dancy. Conversely, although the resins prepared according to Comparative Examples 4 and 5 showed good flame retardancy and impact strength, they also showed a decrease in light reflectance and yellow index after UV irradiation. Particularly, the resin prepared in Comparative Example 5 showed a very low light reflectivity even before UV irradiation and the largest decrease in yellow index. Although the resin prepared in Comparative Example 6 showed a slight decrease in light reflectivity and yellow index and good flame retardancy, it also displayed the lowest Izod impact strength.

In contrast, the resins prepared according to Examples 1-3 showed only a slight change in color, high impact strength and good flame retardancy while maintaining high light reflectance after UV irradiation.

Those skilled in the art will readily recognize and appreciate that many modifications and variations can be made without departing from the scope and spirit of the invention. Such modifications and variations are encompassed within the scope and spirit of the present invention.

### Industrial Applicability

The polycarbonate resin composition of the present invention can be used in the molding of a variety of electronic products, including backlight components for liquid crystal displays, television sets, monitors and notebook computers.

## Claims

1. A polycarbonate resin composition, comprising:
(A) 100 parts by weight of a thermoplastic polycarbonate resin;
(B) 5 to 30 parts by weight of titanium dioxide;
(C) 1 to 10 parts by weight of an impact modifier;
(D) 0.1 to 10 parts by weight of a phenyl-substituted siloxane copolymer; and
(E) 0.05 to 5 parts by weight of a fluorinated polyolefin resin,
wherein the impact modifier (C) is a graft copolymer consisting of (c1) 5 to 95 parts by weight of a monomer mixture and (c2) 5 to 95 parts by weight of a rubber-like polymer,
wherein the monomer mixture (c1) comprises:
(c1.1) 50 to 95 parts by weight of a C1-C8 methacrylic acid alkyl ester, a C1-C8 acrylic acid alkyl ester, or a mixture of two or more of the foregoing materials; and
(c1.2) 5 to 50 parts by weight of acrylonitrile, methacrylonitrile, a C1-C8 methacrylic acid alkyl ester, a C1-C8 acrylic acid alkyl ester, or a mixture of two or more of the foregoing materials,
and wherein the rubber-like polymer (c2) is selected from the group consisting of acryl rubbers, polyorganosiloxanelpolyalkyl(meth)acrylate rubber composites, and mixtures of two or more of the foregoing materials.

2. The polycarbonate resin composition according to claim 1, wherein the titanium dioxide (B) is surface-treated with at least one agent selected from the group consisting of inorganic and organic surface-treating agents.

3. The polycarbonate resin composition according to claim 2, wherein the surface-treated titanium dioxide is further treated with an inorganic or organic surface- treating agent.

4. The polycarbonate resin composition according to claim 1, wherein the C1-C8 methacrylic acid alkyl ester is methacrylic acid methyl ester, methacrylic acid ethyl ester, or methacrylic acid propyl ester; and the C1-C8 acrylic acid alkyl ester is acrylic acid ethyl ester.

5. The polycarbonate resin composition according to claim 1, wherein the phenyl-substituted siloxane copolymer (D) is selected from the group consisting of poly(methylphenyl)siloxone, poly(diphenyl)siloxane, dimethylsiloxane-diphenylsiloxane copolymers, dimethylsiloxane-methylphenylsiloxane copolymers and combinations of two or more of the foregoing materials.

6. The polycarbonate resin composition according to claim 1, wherein the fluorinated polyolefin resin (E) has an average particle size of 0.05 to 1,000 µm and a density of 1.2 to 2.3 g/cm³.

7. The polycarbonate resin composition according to claim 1, further comprising an additive selected from the group consisting of UV stabilizers, fluorescent brighteners, antioxidants, heat stabilizers, lubricants, release agents, nucleating agents, antistatic agents, stabilizers, reinforcing agents, inorganic additives, pigments, dyes, and mixtures of two or more of the foregoing materials.

8. A molded article produced from the polycarbonate resin composition according to any one of claims 1 to 7.

## Patentansprüche

1. Polycarbonatharzzusammensetzung, die folgendes umfasst:
(A) 100 Gewichtsteile eines thermoplastischen Polycarbonatharzes;
(B) 5 bis 30 Gewichtsteile Titandioxid;
(C) 1 bis 10 Gewichtsteile eines Schlagzähigkeitsverbesserers;
(D) 0,1 bis 10 Gewichtsteile eines phenylsubstituierten Siloxancopolymers; und
(E) 0,05 bis 5 Gewichtsteile eines fluorierten Polyolefinharzes;
wobei es sich bei dem Schlagzähigkeitsverbesserer (C) um ein Pfropfcopolymer handelt, das aus (c1) 5 bis 95 Gewichtsteilen einer Monomermischung und (c) 5 bis 95 Gewichtsteilen eines kautschukartigen Polymers besteht;
wobei die Monomermischung (c1) folgendes umfasst:
(c1.1) 50 bis 95 Gewichtsteile eines C1-C8 Methacrylsäurealkylesters, eines C1-C8 Acrylsäurcalkylosters oder einer Mischung aus zwei oder mehr der vorstehenden Stoffe; und
(c1.2) 5 bis 50 Gewichtsteile Acrylonitril, Methacrylonitril, eines C1-C8 Methacrylsäurealkylesters, eines C1-C8 Arcylsäurealkylesters oder einer Mischung aus zwei oder mehr der vorstehenden Stoffe;
und wobei das kautschukartige Polymer (c2) ausgewählt wird aus der Gruppe, die folgendes umfasst: Acrylkautschuk, Polyorganosiloxan/Polyalkyl(meth)acrylatkautschuk-Verbundstoffe und Mischungen aus zwei oder mehr der vorstehenden Stoffe.

2. Polycarbonatharzzusammensctzung nach Anspruch 1, wobei das Titandioxid (B) oberflächenbehandelt ist mit mindestens einem Mittel, das aus der Gruppe ausgewählt wird, die anorganische und organische Oberflächenbehandlungsmittel umfasst.

3. Polycarbonatharzzusammensetzung nach Anspruch 2, wobei das oberflächenbehandelte Titandioxid ferner mit einem anorganischen oder organischen Oberflächenbehandlungsmittel behandelt ist.

4. Polycarbonatharzzusammensetzung nach Anspruch 1, wobei es sich bei dem C1-C8 Methacrylsäurealkylester um Methacrylsäuremethylester, Methacrylsäureethylester oder Methacrylsäurepropylester handelt, und wobei es sich bei dem C1-C8 Acrylsäurcalkylester um Acrylsäurcethylester handelt.

5. Polycarbonatharzzusammensetzung nach Anspruch 1, wobei das phenylsubstituierte Siloxancopolymer (D) aus der Gruppe ausgewählt wird, die folgendes umfasst:
Poly(methylphenyl)siloxan, Poly(diphenyl)siloxan, Dimethylsiloxan-Diphenyisiloxan-Copolymere, Dimethylsiloxan-Methylphonylsiloxan-Copolymere und Kombinationen aus zwei oder mehr der vorstehenden Stoffe.

6. Polycarbonatharzzusammensetzung nach Anspruch 1, wobei das fluorierte Polyolefinharz (E) eine durchschnittliche Teilchengröße von 0,05 bis 1.000 µm und eine Dichte von 1,2 bis 2,3 g/cm² aufweist.

7. Polycarbonatharzzusammensetzung nach Anspruch 1, wobei diese ferner ein Additiv umfasst, das aus der Gruppe ausgewählt wird, die folgendes umfasst: UV-Stabilisatoren; optische Aufheller, Antioxidationsmittel, Wärmestabilisatoren, Gleitmittel, Trennmittel, Keimbildner, Antistatika, Stabilisatoren, Verstärkungsmittel, anorganische Additive, Pigmente, Farbstoffe und Mischungen aus zwei oder mehr der vorstehenden Stoffe.

8. Formkörper, der aus der Polycarbonatharzzusammensetzung nach einem der Ansprüche 1 bis 7 hergestellt worden ist.

## Revendications

1. Composition de résine de polycarbonate, comprenant :
(A) 100 parties en poids d'une résine de polycarbonate thermoplastique
(B) 5 à 30 parties en poids de dioxyde de titane ;
(C) 1 à 10 parties en poids d'un modificateur d'impact ;
(D) 0, à 10 parties en poids d'un copolymère de phényle-siloxane substitué ; et
(E) 0,05 à 5 parties en poids d'une résine de polyoléfine fluorée,
dans laquelle le modificateur d'impact (C) est un copolymère greffé constitué de (c1) 5 à 95 parties en poids d'un mélange de monomères et (c2) 5 à 95 parties en poids d'un polymère de type caoutchouc,
dans laquelle le mélange de monomères (c1) comprend :
(c1.1) 50 à 95 parties en poids d'un ester alkylique d'acide méthacrylique en C1-C8, d'un ester alkylique d'acide acrylique en C1-C8 ou d'un mélange de deux ou plus des matériaux précédents ; et
(c1.2) 5 à 50 parties en poids d'acrylonitrile, de méthacrylonitrile, d'un ester alkylique d'acide méthacrylique en C1-C8, d'un ester alkylique d'acide acrylique en C1-C8 ou d'un mélange de deux ou plus des matériaux précédents,
et dans laquelle le polymère de type caoutchouc (c2) est sélectionné parmi le groupe constitué de caoutchoucs d'acryle, de composites de caoutchouc de polyorganosiloxane/polyalkyl(méth)acrylate et de mélange de deux ou plus des matériaux précédents.

2. Composition de résine de polycarbonate selon la revendication 1, dans laquelle le dioxyde de titane (B) est traité en surface avec au moins un agent sélectionné parmi le groupe constitué d'agents de traitement de surface inorganiques et organiques.

3. Composition de résine de polycarbonate selon la revendication 2, dans laquelle le dioxyde de titane traité en surface est en outre traité avec un agent de traitement de surface inorganique ou organique.

4. Composition de résine de polycarbonate selon la revendication 1, dans laquelle l'ester alkylique d'acide méthacrylique en C1-C8 est l'ester méthylique d'acide
méthacrylique, l'ester éthylique d'acide méthacrylique ou l'ester propylique d'acide méthacrylique ; et l'ester alkylique d'acide acrylique en C1-C8 est l'ester éthylique d'acide acrylique.

5. Composition de résine de polycarbonate selon la revendication 1, dans laquelle le copolymère de phényle-siloxane substitué (D) est sélectionné parmi le groupe constitué de poly(méthylphényl)siloxane, poly(diphényl)siloxane, copolymères de diméthylsiloxane-diphénylsiloxane, copolymères de diméthylsiloxane-méthylphénylsiloxane et combinaisons de deux ou plus des matériaux précédents.

6. Composition de résine de polycarbonate selon la revendication 1, dans laquelle la résine de polyoléfine fluorée (E) possède une taille particulaire moyenne de 0.05 à 1,000 µm et une densité de 1,2 à 2,3 g/cm³

7. Composition de résine de polycarbonate selon la revendication 1, comprenant en outre un additif sélectionné parmi le groupe constitué de stabilisants UV, d'azurants optiques fluorescents, d'antioxydants, de stabilisants thermiques, de lubrifiants, d'agents de libération, d'agents de nucléation, d'agents antistatiques, de stabilisants, d'agents de renforcement, d'additifs inorganiques, de pigments, de colorants et de mélanges de deux ou plus des matériaux précédents.

8. Article moulé produit à partir de la composition de résine de polycarbonate selon l'une quelconque des revendications 1 à 7.
